# EUROPÄISCHE PATENTSCHRIFT

(11) **EP 2 546 024 B1**
(45) Veröffentlichungstag und Bekanntmachung des Hinweises auf die Patenterteilung: **26.03.2014**
(21) Anmeldenummer: 11173399.4
(22) Anmeldetag: 11.07.2011
(51) Int. Cl.: B23Q 3/157, B23Q 5/04, B23Q 39/02

(54) **Drehmomentabgestütztes Bearbeitungswerkzeug für eine mehrspindlige Werkzeugmaschine**
Torque-supported machining tool for a multi-spindle machine tool
Outil de traitement assisté par couple pour une machine-outil à plusieurs broches

(43) Veröffentlichungstag der Anmeldung: 16.01.2013
(73) Patentinhaber: Schwäbische Werkzeugmaschinen GmbH, 78713 Schramberg-Waldmössingen (DE)
(72) Erfinder: Weber, Stefan, Dipl.-Ing., 78662 Bösingen (DE)
(74) Vertreter: Rupp, Stefan Uli

(56) Entgegenhaltungen:
- WO-A1-2009/121343
- DE-A1-102008 033 530
- US-A- 6 099 449

## Beschreibung

Die Erfindung betrifft ein drehmomentabgestütztes Bearbeitungswerkzeug, insbesondere ein Winkelbohrkopf- oder Fräskopf-Werkzeug, für eine mehrspindlige Werkzeugmaschine.

An mehrspindligen Werkzeugmaschinen, wie z.B. Fräsmaschinen und Bearbeitungszentren, werden zur Herstellung von Bohrungen oder Flächen, die bezogen auf die Maschinenachsen rechtwinklig oder schräg liegen, vielfach Winkelbohr- oder Fräsköpfe eingesetzt. Diese bestehen aus einem Winkelgetriebe, das in einem Gehäuse aufgenommen ist, welches stationär am Arbeitsspindelkasten der Werkzeugmaschine drehmomentabgestützt ("indexiert") wird. Damit wird die Winkellage der Abtriebsspindel des Winkelbohr- oder Fräskopfes bestimmt. Angetrieben und gehalten wird der Winkelbohr- oder Fräskopf über die normale Arbeitsspindelschnittstelle der Werkzeugmaschine. Bei Werkzeugmaschinen mit automatischem Werkzeugwechsel erfolgt auch der Wechsel des Winkelbohr- oder Fräskopfkopfs ebenfalls automatisch, wobei der komplette Winkelbohr- oder Fräskopfkopf im Magazin abgelegt wird. Dazu wird über die Drehmomentstütze ("Indexierung") des Winkelbohr- oder Fräskopfs eine Verdrehsicherung aktiviert, damit sich der Winkelbohr- bzw. Fräskopf im Magazin nicht verdreht.

Problematisch bei den derzeitigen Systemen ist zum einen die mangelnde Einwechselgenauigkeit der Bohrkopfindexierung, die sich in einer Fehlstellung des Winkelbohrkopfs auswirkt. Zum anderen ist die Steifigkeit der Drehmomentabstützung des Winkelbohr- oder Fräskopfkopfs am Arbeitsspindelkasten sehr gering. Die komplette radiale Belastung bezogen auf die Maschinenarbeitsspindel muss durch die Maschinenarbeitsspindel aufgenommen werden. Dies ist bei höheren Bearbeitungskräften oft problematisch, da aufgrund der großen Baulänge der Winkelbohr- oder Fräsköpfe hohe Biegemomente auf die Maschinenarbeitsspindel wirken, was sich in entsprechenden Nachgiebigkeiten und Verlagerungen auswirkt, die wiederum die Bearbeitungsleistung und -qualität negativ beeinflussen.

Es ist demgegenüber die Aufgabe der Erfindung, ein drehmomentabgestütztes Bearbeitungswerkzeug bereitzustellen, das eine höhere Steifigkeit der Drehmomentabstützung aufweist.

Diese Aufgabe wird erfindungsgemäß durch ein drehmomentabgestütztes Bearbeitungswerkzeug mit den Merkmalen von Anspruch 1 gelöst.

Erfindungsgemäß erfolgt bei mehrspindligen Werkzeugmaschinen die Drehmomentabstützung ("Indexierung") der Bohrköpfe dadurch, dass die Gehäuse der Bearbeitungsköpfe unverdrehbar miteinander verbunden sind. Durch diese feste Verbindung, z.B. in Form eines biegesteifen Verbindungsarms, werden die auftretenden Bearbeitungskräfte nun durch die beiden weit auseinander liegenden Arbeitsspindeln aufgenommen, so dass bezogen auf die Maschinenarbeitsspindeln die Biegemomente wesentlich reduziert werden. Dies bewirkt eine drastische Verbesserung der Bearbeitungsleistung und Bearbeitungsqualität. Diese Verbindung von Bearbeitungsköpfen bewirkt eine sehr exakte Indexierung bzw. Ausrichtung der Bearbeitungsköpfe, weil - im Vergleich zur bisherigen Drehmomentabstützung - nunmehr der Hebel der Bohrkopfindexierung um ein Vielfaches länger ist und weil die Spindelschnittstelle um ein Vielfaches genauer ist. Die derzeit übliche maschinenseitige Einrichtung zur Bohrkopfindexierung kann komplett entfallen, da lediglich die Arbeitsspindeln über den Verbindungsarm die Ausrichtung des Bohrkopfs bewirken.

Bei 4- oder höherspindligen Maschinen können vorzugsweise jeweils die Bearbeitungsköpfe paarweise miteinander verbunden werden, um den gewünschten Indexierungs- und Abstützungseffekt zu erzielen.

Die beiden Bearbeitungsköpfe können entweder in einem festen Abstand, also starr, miteinander verbunden sein oder aber zueinander in Abstandsrichtung frei verschiebbar gelagert sein, um dadurch einen Längenausgleich zwischen den beiden Bearbeitungsköpfe zu ermöglichen. Dieser Längenausgleich ist erforderlich, um die beiden Bearbeitungsköpfe in zwei benachbarten Werkzeugablageplätzen im normalen Kettenmagazin ablegen zu können, ohne eine Veränderung daran vornehmen zu müssen. Der Abstand der Werkzeugachsen im Werkzeugmagazin ist nicht konstant, sondern verändert sich entsprechend der Kurven des Werkzeugmagazins.

Die Erfindung ist dabei nicht auf ein drehmomentabgestütztes Doppelwerkzeug mit mindestens zwei Bearbeitungsköpfen beschränkt, sondern betrifft auch ein drehmomentabgestütztes Einfachwerkzeug mit nur einem einzigen Bearbeitungskopf und mit einem weiteren Kopf, der ein Leerlaufgetriebe für die andere Arbeitsspindel aufweist, wobei zur Drehmomentabstützung des Bearbeitungskopfes die Gehäuse des Bearbeitungskopfes und des weiteren Kopfes miteinander unverdrehbar verbunden sind.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: das erfindungsgemäße Bearbeitungswerkzeug mit zwei gehäuseseitig verschiebbar, aber unverdrehbar miteinander verbundenen Winkelbohrköpfen;
- Fig. 2: schematisch eine Werkzeugmaschine mit zwei Arbeitsspindeln, an denen das erfindungsgemäße Bearbeitungswerkzeug drehmomentabgestützt befestigt ist;
- Fig. 3: schematisch eine Werkzeugmaschine mit vier Arbeitsspindeln, an denen zwei erfindungsgemäße Bearbeitungswerkzeuge jeweils drehmomentabgestützt befestigt sind;
- Fign. 4a-4c: ein Werkzeugkettenmagazin zur Aufnahme des erfindungsgemäßen Bearbeitungswerkzeugs in verschiedenen Kurvenabschnitten;
- Fign. 5-8: schematisch weitere Ausführungsformen von zwei gehäuseseitig verschiebbar, aber unverdrehbar miteinander verbundenen Winkelbohrköpfen; und
- Fig. 9: eine noch weitere Ausführungsform eines erfindungsgemäßen Bearbeitungswerkzeugs mit einer Fräswelle.

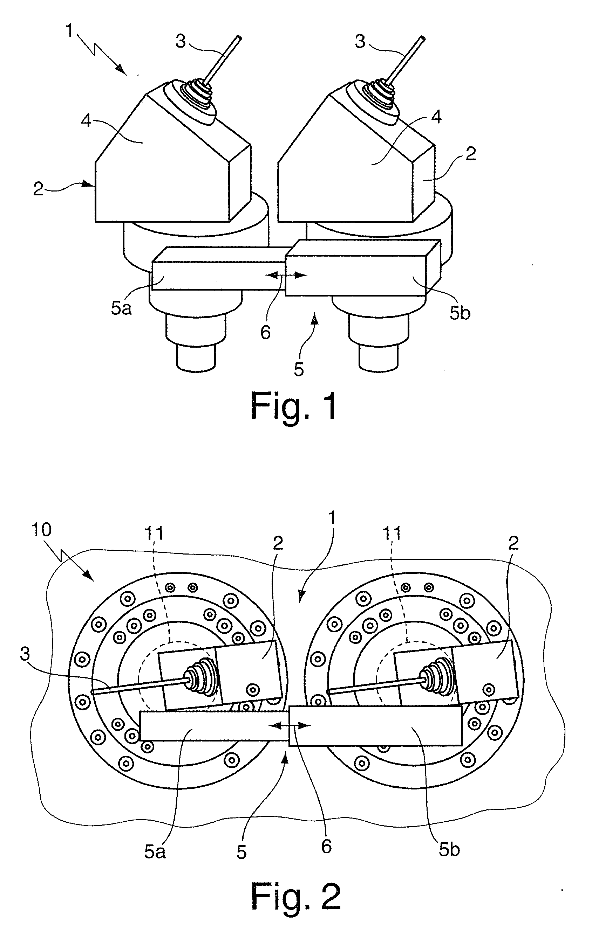

Das in **Fig. 1** gezeigte Bearbeitungswerkzeug **1** umfasst zwei Winkelbohrköpfe **2** zur drehmomentabgestützten Befestigung an parallelen Arbeitsspindeln **11** (Fig. 2) einer hier lediglich schematisch angedeuteten mehrspindligen Werkzeugmaschine **10** zur spanenden Bearbeitung von Werkstücken. Die Abtriebsspindeln der Winkelbohrköpfe 2 sind mit **3** bezeichnet. Die Winkelbohrköpfe 2 weisen jeweils ein Winkelgetriebe (nicht gezeigt) auf, das in einem Gehäuse **4** aufgenommen ist. Angetrieben und gehalten werden die Winkelbohrköpfe **2** über die normale arbeitsspindelseitige Werkzeugwechselschnittstelle der Werkzeugmaschine 10. Die Gehäuse 4 der beiden Winkelbohrköpfe 2 sind durch einen bügelförmigen Verbindungsarm **5** miteinander verbunden. Der Verbindungsarm 5 ist als Teleskopauszug mit zwei jeweils an einem Gehäuse 4 befestigten Armteilen **5a, 5b** ausgebildet, die in Längsrichtung gegeneinander frei verschiebbar (Doppelpfeil **6**) geführt sind.

In **Fig. 2** ist das Bearbeitungswerkzeug 1 mit seinen beiden Winkelbohrköpfen 2 an den beiden Arbeitsspindeln 11 befestigt, wodurch die beiden Gehäuse 4 der Winkelbohrköpfe 2 durch den biegesteifen Verbindungsarm 5 gegenseitig drehmomentabgestützt sind. Mit anderen Worten erfolgt die Drehmomentabstützung ("Indexierung") der beiden Winkelbohrköpfen 2 nicht lokal im Bereich der jeweiligen Spindelschnittstelle, sondern mithilfe des Verbindungsarms 5 über die jeweils andere Arbeitsspindel. Die auftretenden Bearbeitungskräfte werden durch die beiden weit auseinander liegenden Arbeitsspindeln 11 aufgenommen, so dass bezogen auf die Arbeitsspindeln 11 die Biegemomente wesentlich reduziert werden. Dies bewirkt eine drastische Verbesserung der Bearbeitungsleistung und Bearbeitungsqualität sowie auch eine sehr exakte Indexierung bzw. Ausrichtung der Winkelbohrköpfe 2, weil - im Vergleich zur bisherigen Drehmomentabstützung - nunmehr der Hebel der Bohrkopfindexierung um ein Vielfaches länger ist und weil die Spindelschnittstelle um ein Vielfaches genauer ist.

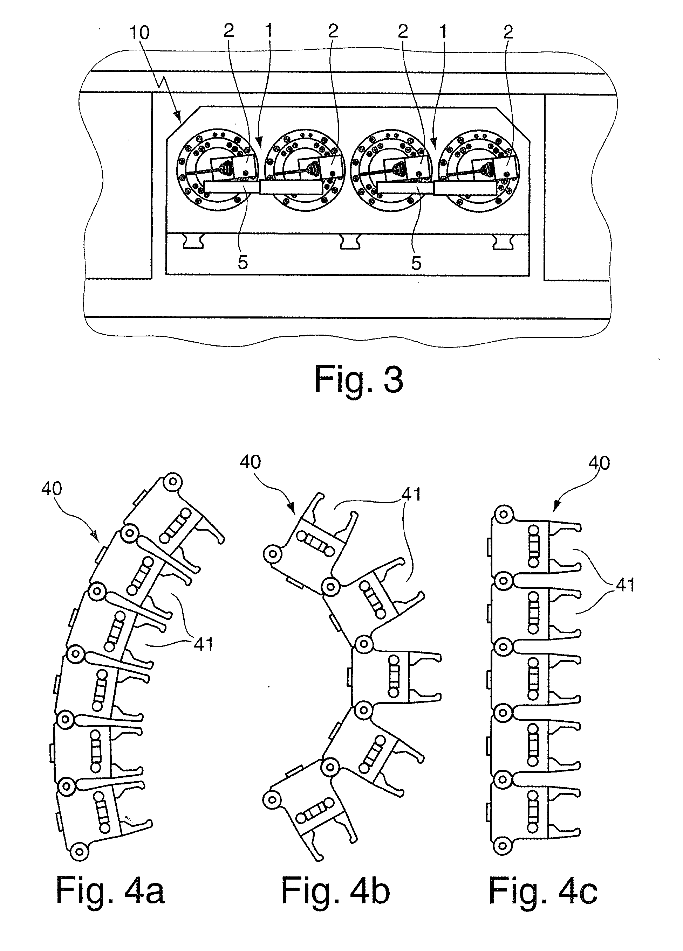

Die freie Längsverschiebung der beiden Armteile 5a, 5b ermöglicht einen Längenausgleich im Verbindungsarm 5. Ein solcher Längenausgleich ist erforderlich, um das Bearbeitungswerkzeug 1 mit seinen beiden Winkelbohrköpfen 2 in zwei Werkzeugablageplätzen **41** eines normalen Werkzeugkettenmagazins **40** (Fig. 4) ablegen zu können, ohne eine Veränderung daran vornehmen zu müssen. Wie in **Fign. 4a bis 4c** gezeigt, ist der Achsabstand der Werkzeugablageplätze 41 im Werkzeugmagazin 40 nämlich nicht konstant, sondern verändert sich entsprechend der Kurven des Werkzeugmagazins 40.

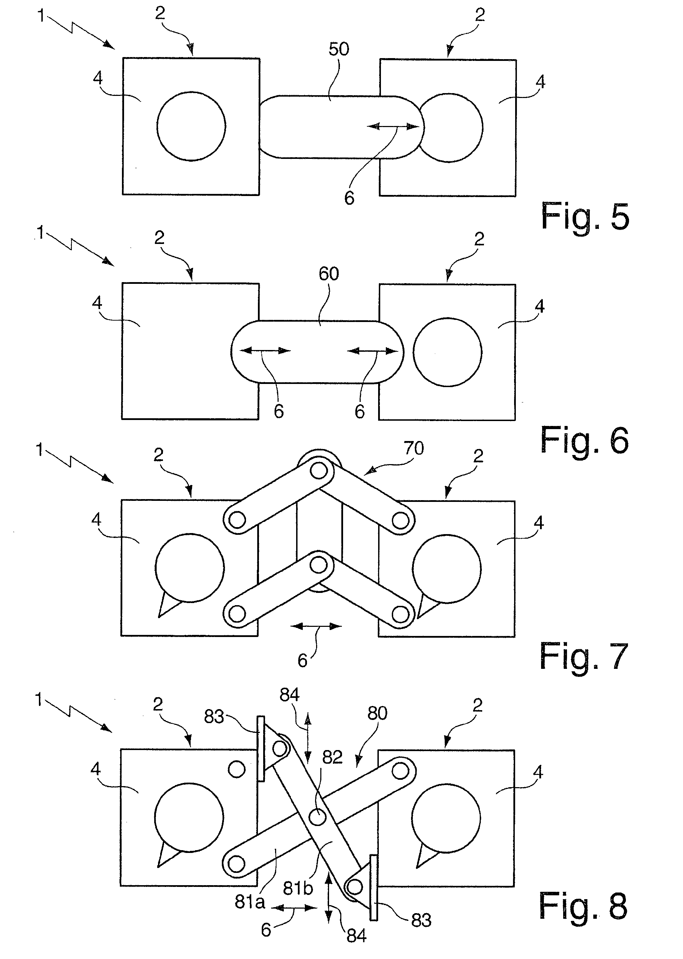

Bei dem in **Fig. 5** gezeigten Bearbeitungswerkzeug 1 ist das Gehäuse 4 des rechten Winkelbohrkopfes 2, wie durch den Doppelpfeil 6 angedeutet, an einem Verbindungsarm **50** des Gehäuses 4 des linken Winkelbohrkopfes 2 linear verschiebbar, aber unverdrehbar gelagert.

Bei dem in **Fig. 6** gezeigten Bearbeitungswerkzeug 1 sind die Gehäuse 4 der beiden Winkelbohrköpfe 2 an einem Verbindungsträger **60** jeweils linear verschiebbar, aber unverdrehbar gelagert, wie durch die beiden Doppelpfeile 6 angedeutet ist.

Bei dem in **Fig. 7** gezeigten Bearbeitungswerkzeug 1 sind die Gehäuse 4 der beiden Winkelbohrköpfe 2 über einen Parallelogrammauszug **70** linear verschiebbar, aber unverdrehbar gelagert, wie durch den Doppelpfeil 6 angedeutet ist.

Bei dem in **Fig. 8** gezeigten Bearbeitungswerkzeug 1 sind die Gehäuse 4 der beiden Winkelbohrköpfe 2 über einen Scherenauszug **80** linear verschiebbar, aber unverdrehbar gelagert, wie durch den Doppelpfeil 6 angedeutet ist. Die beiden Scherenarme **81a, 81b** sind miteinander bei **82** gelenkig verbunden, wobei der eine Scherenarm 81a an beiden Gehäusen 4 fest angelenkt ist und der andere Scherenarm 81b jeweils an Schlitten **83** angelenkt ist, die in Doppelpfeilrichtung **84** jeweils an den Gehäusen 4 querbeweglich geführt sind.

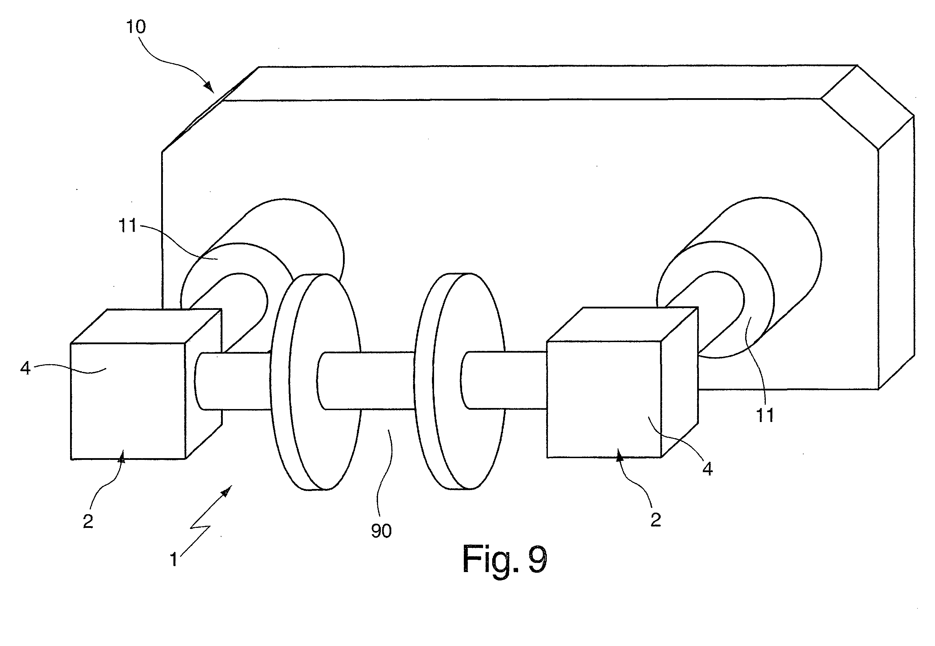

**Fig. 9** zeigt ein Bearbeitungswerkzeug 1 mit zwei Fräsköpfen 2, in deren Lager bzw. Getrieben (nicht gezeigt) eine Fräswelle **90** drehbar gelagert ist. Durch die Fräswelle 90 sind die Gehäuse 4 der beiden Fräsköpfe 2 miteinander unverdrehbar verbunden und dadurch gegenseitig drehmomentabgestützt. Die beiden Fräsköpfe 2 sind an zwei Arbeitsspindeln 11 der Werkzeugmaschine 10 angetrieben und gehalten. Die Fräswelle 90 kann wahlweise einseitig über nur einen der beiden Fräsköpfe 2 oder beidseitig über beide Fräsköpfe 2 angetrieben werden. Im ersteren Fall kann für einen Längenausgleich die Fräswelle 90 im nicht angetriebenen Fräskopf 2 axial verschiebbar gelagert sein.

## Patentansprüche

1. Drehmomentabgestütztes Bearbeitungswerkzeug (1) für eine mehrspindlige Werkzeugmaschine (10),
mit mindestens einem, ein Gehäuse (4) aufweisenden Bearbeitungskopf (2) zur Befestigung an einer ersten Arbeitsspindel (11) der mehrspindligen Werkzeugmaschine (10) und
mit mindestens einem, ein Gehäuse (4) aufweisenden weiteren Kopf (2) zur Befestigung an einer parallelen zweiten Arbeitsspindel (11) der mehrspindligen Werkzeugmaschine (10),
wobei zur Drehmomentabstützung das Gehäuse (4) des Bearbeitungskopfes (2) mit dem Gehäuse (4) des weiteren Kopfes (2) unverdrehbar verbunden ist.

2. Bearbeitungswerkzeug nach Anspruch 1, **dadurch gekennzeichnet, dass** der weitere Kopf (2) nicht als Bearbeitungskopf ausgebildet ist.

3. Bearbeitungswerkzeug nach Anspruch 1, **dadurch gekennzeichnet, dass** auch der weitere Kopf (2) als Bearbeitungskopf ausgebildet ist.

4. Bearbeitungswerkzeug nach Anspruch 3, **dadurch gekennzeichnet, dass** die Bearbeitungsköpfe (2) jeweils als Winkelbohrköpfe oder als Fräsköpfe ausgebildet sind.

5. Bearbeitungswerkzeug nach einem der vorhergehenden Ansprüche, **dadurch gekennzeichnet, dass** die beiden Köpfe (2) in einem festen Abstand miteinander verbunden sind.

6. Bearbeitungswerkzeug nach einem der Ansprüche 1 bis 4, **dadurch gekennzeichnet, dass** die beiden Köpfe (2) zueinander in ihrer Abstandsrichtung frei verschiebbar (6), aber zueinander unverdrehbar gelagert sind.

7. Bearbeitungswerkzeug nach Anspruch 6, **dadurch gekennzeichnet, dass** der eine Kopf (2) an einem Verbindungsarm (50) des anderen Kopfes (2) verschiebbar gelagert ist.

8. Bearbeitungswerkzeug nach Anspruch 6, **dadurch gekennzeichnet, dass** die beiden Köpfe (2) an einem Verbindungsträger (60) jeweils verschiebbar gelagert sind.

9. Bearbeitungswerkzeug nach Anspruch 6, **dadurch gekennzeichnet, dass** die beiden Köpfe (2) über einen Teleskopauszug (5), einen Parallelogrammauszug (70) oder einen Scherenauszug (80) miteinander verbunden sind.

10. Bearbeitungswerkzeug nach einem der vorhergehenden Ansprüche, **dadurch gekennzeichnet, dass** die beiden Köpfe (2) durch eine in ihnen drehbar gelagerte Welle (90) miteinander verbunden sind.

11. Bearbeitungswerkzeug nach Anspruch 10, **dadurch gekennzeichnet, dass** die Welle (90) einseitig über nur einen oder beidseitig über zwei Köpfe (2) angetrieben ist.

12. Bearbeitungswerkzeug nach Anspruch 10 oder 11, **dadurch gekennzeichnet, dass** die Welle (90) als Fräswelle ausgebildet ist.

13. Mehrspindlige Werkzeugmaschine (10) zur spanenden Bearbeitung von Werkstücken, mit mindestens zwei parallelen Arbeitsspindeln (11) und mit mindestens einem Bearbeitungswerkzeug (1) nach einem der vorhergehenden Ansprüche, dessen Köpfe (2) an den Arbeitsspindeln (11) befestigt sind.

14. Mehrspindlige Werkzeugmaschine nach Anspruch 13, **dadurch gekennzeichnet, dass** das Bearbeitungswerkzeug (1) in benachbarten Werkzeugablageplätzen (41) eines Werkzeugmagazins (40) ablegbar ist.

## Claims

1. Torque-supported machining tool (1) for a multiple-spindle machine tool (10), comprising at least one processing head (2) having a housing (4) to be mounted to a first work spindle (11) of the multiple-spindle machine tool (10) and at least one further head (2) having a housing (4) to be mounted to a parallel second work spindle (11) of the multiple-spindle machine tool (10), wherein for supporting the torque, the housing (4) of the processing head (2) is non-rotatably connected to the housing (4) of the further head (2).

2. Machining tool according to claim 1, **characterized in that** the further head (2) is not designed as a processing head.

3. Machining tool according to claim 1, **characterized in that** the further head (2) is also designed as a processing head.

4. Machining tool according to claim 3, **characterized in that** each processing head (2) is designed as an angular drilling head or as a milling head.

5. Machining tool according to any one of the preceding claims, **characterized in that** the two heads (2) are connected to each other at a fixed distance from each other.

6. Machining tool according to any one of the claims 1 to 4, **characterized in that** the two heads (2) are disposed in such a manner that they can be freely displaced (6) with respect to each other in the direction of their distance but cannot rotate relative to each other.

7. Machining tool according to claim 6, **characterized in that** one of the heads (2) is displaceably disposed on a connecting arm (50) of the other head (2).

8. Machining tool according to claim 6, **characterized in that** the two heads (2) are each displaceably disposed on a connection support (60).

9. Machining tool according to claim 6, **characterized in that** the two heads (2) are connected to each other via a telescopic extension (5), a parallelogram extension (70) or a scissors extension (80).

10. Machining tool according to any one of the preceding claims, **characterized in that** the two heads (2) are connected to each other by a shaft (90) which is rotatably disposed therein.

11. Machining tool according to claim 10, **characterized in that** the shaft (90) is driven on one side by only one head or on both sides by two heads (2).

12. Machining tool according to claim 10 or 11, **characterized in that** the shaft (90) is designed as a milling shaft.

13. Multiple-spindle machine tool (10) for machining workpieces, comprising at least two parallel work spindles (11) and at least one machining tool (1) according to any one of the preceding claims, the heads (2) of which are mounted to the work spindles (11).

14. Multiple-spindle machine tool according to claim 13, **characterized in that** the machining tool (1) can be deposited in neighbouring tool deposit areas (41) of a tool magazine (40).

## Revendications

1. Outil d'usinage (1) assisté par couple pour une machine-outil (10) à plusieurs broches,
avec au moins une tête d'usinage (2) présentant un boîtier (4) et destinée à être fixée sur une première broche de travail (11) de la machine-outil (10) à plusieurs broches,
et avec au moins une autre tête (2) présentant un boîtier (4) et destinée à être fixée sur une deuxième broche de travail parallèle (11) de la machine-outil (10) à plusieurs broches,
sachant que pour l'assistance par couple, le boîtier (4) de la tête d'usinage (2) est relié sans possibilité de rotation au boîtier (4) de l'autre tête (2).

2. Outil d'usinage selon la revendication 1, **caractérisé en ce que** l'autre tête (2) n'est pas réalisée sous forme de tête d'usinage.

3. Outil d'usinage selon la revendication 1, **caractérisé en ce que** l'autre tête (2) est réalisée sous forme de tête d'usinage.

4. Outil d'usinage selon la revendication 3, **caractérisé en ce que** les têtes d'usinage (2) sont chacune réalisées sous forme de têtes de forage angulaire ou sous forme de têtes de fraisage.

5. Outil d'usinage selon l'une des revendications précédentes, **caractérisé en ce que** les deux têtes (2) sont reliées à une distance fixe entre elles.

6. Outil d'usinage selon l'une des revendications 1 à 4, **caractérisé en ce que** les deux têtes (2) sont montées à libre translation relative (6) dans leur direction d'espacement, mais sans possibilité de rotation relative.

7. Outil d'usinage selon la revendication 6, **caractérisé en ce que** l'une des têtes (2) est montée à translation sur un bras de liaison (50) de l'autre tête (2).

8. Outil d'usinage selon la revendication 6, **caractérisé en ce que** les deux têtes (2) sont chacune montées à translation sur un élément porteur de liaison (60).

9. Outil d'usinage selon la revendication 6, **caractérisé en ce que** les deux têtes (2) sont reliées entre elles par l'intermédiaire d'un bras télescopique (5), d'un bras en parallélogramme articulé (70) ou d'un bras en ciseaux (80).

10. Outil d'usinage selon l'une des revendications précédentes, **caractérisé en ce que** les deux têtes (2) sont reliées entre elles par un arbre (90) monté à rotation dans elles.

11. Outil d'usinage selon la revendication 10, **caractérisé en ce que** l'arbre (90) est entraîné d'un côté au moyen d'une seule tête (2), ou des deux côtés au moyen de deux têtes (2).

12. Outil d'usinage selon la revendication 10 ou 11, **caractérisé en ce que** l'arbre (90) est réalisé sous forme d'arbre de fraisage.

13. Machine-outil (10) à plusieurs broches pour l'usinage de pièces par enlèvement de matière, avec au moins deux broches de travail parallèles (11) et avec au moins un outil d'usinage (1) selon l'une des revendications précédentes, dont les têtes (2) sont fixées sur les broches de travail (11).

14. Machine-outil (10) à plusieurs broches selon la revendication 13, **caractérisée en ce que** l'outil d'usinage (1) peut être rangé dans des emplacements de rangement d'outils voisins (41) d'un magasin d'outils (40).
